# EUROPÄISCHE PATENTSCHRIFT

(11) **EP 0 682 207 B1**
(45) Veröffentlichungstag und Bekanntmachung des Hinweises auf die Patenterteilung: **12.12.2001**
(21) Anmeldenummer: 95100381.3
(22) Anmeldetag: 12.01.1995
(51) Int. Cl.: F16M 1/08

(54) **Gerundete Raumecke an einem Blechgehäuse für ein Hausgerät**
Rounded corner of a sheet metal casing for a household apparatus
Coin arrondi d'un carter en tôle pour un appareil ménager

(30) Priorität: 12.04.1994 DE 4412546
(43) Veröffentlichungstag der Anmeldung: 15.11.1995
(73) Patentinhaber: BSH Bosch und Siemens Hausgeräte GmbH, 81669 München (DE)
(72) Erfinder: Nitsche, Alfred, D-13351 Berlin (DE)

(56) Entgegenhaltungen:
- DE-A- 1 435 014
- DE-A- 3 813 462
- GB-A- 2 168 387

## Beschreibung

Die Erfindung geht aus von einer gerundeten Raumecke an einem Blechgehäuse für ein Hausgerät, bei der im Eckenbereich um eine gemeinsame Kante hochgestellte Laschen nach einem weiteren Biegevorgang um eine rechtwinklig zur Kante und parallel zur Blechfläche liegende Achse sich überlappen und im Überlappungsbereich miteinander unlösbar verbunden sind, die nach dem Hochstellen durch einen gemeinsam mit ihnen hochgestellten schmalen Blechabschnitt an ihrer Wurzel miteinander verbunden sind.

Eine derartige Raumecke ist an einem Waschmaschinengehäuse aus der DE 38 13 462 A1 bekannt. Der dortige Anspruch 6 und die Beschreibung gehen auf die Verbindung der sich überlappenden Blechabschnitte in den Raumecken mittels Loch-ZapfenVerbindungen ein, erwähnen jedoch nicht, daß die hochgestellten schmalen Blechabschnitte zwischen den überlappenden Blechfalzen bestimmte Abmessungen einhalten müssen, damit sie sich beim Biegen der Blechtafeln um die senkrecht zu den Falten stehende Achse nicht wieder tütenartig zuruckstellen. Dadurch entsteht nämlich eine viertelkreisartig gebogene scharfe Blechschnittkante, die zur Gefahr für Bedienungspersonen werden kann, wenn diese Blechschnittkante beispielsweise an im Frontbereich des Hausgerätes vorspringenden Gehäuseteilen angeordnet ist.

Der Erfindung liegt die Aufgabe zugrunde, eine gerundete Raumecke entsprechend der eingangs beschriebenen Art so zu konstruieren, daß die zuvor beschriebene tütenartige Rückstellung des schmalen Blechabschnitts vermieden werden kann. Eine solche Rückstellung bildet neben der Verletzungsgefahr auch noch einen ästethischen Mangel.

Diese Aufgabe wird dadurch gelöst, daß der hochgestellte Blechabschnitt eine Höhe über der inneren Blechfläche aufweist, die im Bereich der Summe der Blechdicke und dem Biegeradius um die Kante liegt und eine Länge, die im Bereich der Summe der doppelten Blechdicke und dem Biegeradius um die Achse liegt. Die umfaßten Bereiche sind durch das 0,5- ... 2,5-fache der Blechdicke für den Biegeradius um die Kante, durch das 7- ... 12,5-fache der Blechdicke für den Biegeradius um die Achse und durch eine Dicke von etwa 0,8 ... 1 mm für das Blech umrissen.

Vorteilhafterweise liegt dabei der Biegeradius um die Kante im Bereich der Blechdicke.

Wie der Stand der Technik bereits zeigt, werden Hausgerätegehäuse aus vorlackierten Blechen hergestellt. Zum Verschließen der Raumecken gegen das Gehäuseinnere werden auch hochgestellte, schmale Blechabschnitte zwischen den abgekanteten und im Eckenbereich sich überlappenden Laschen vorgesehen. Erst durch die erfindungsgemäße Bemessung können solche zumeist aus Stahlblech gefertigten Gehäuse oder Gehäuseteile mit gerundeten Raumecken ausgebildet werden, die sich nach dem Abkanten nicht wieder tütenartig zurückstellen.

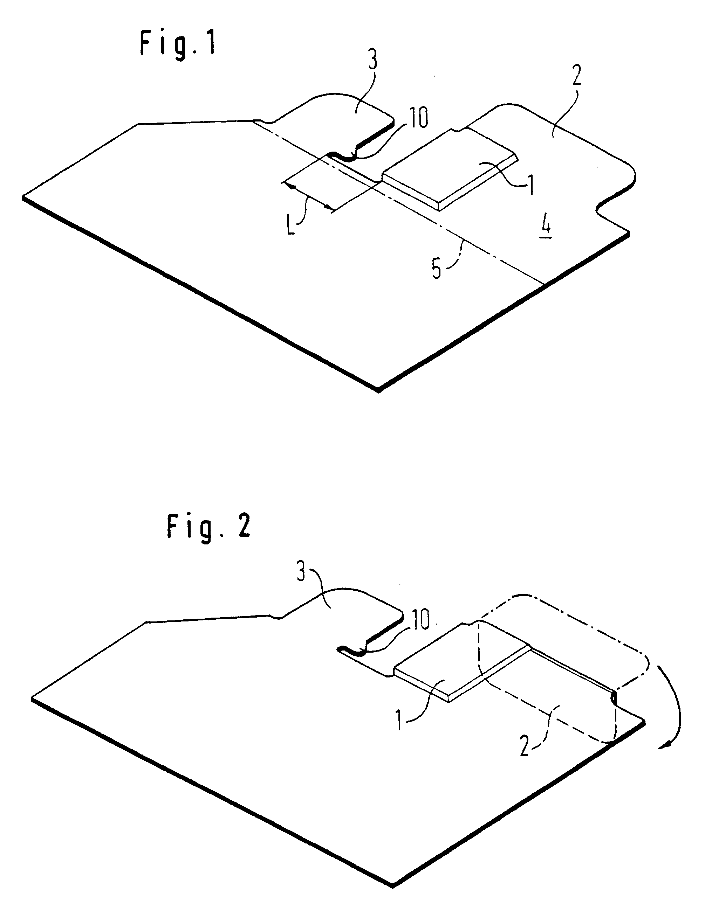

Anhand der in den Figuren 1 bis 6 der Zeichnung dargestellten sechs Phasen der Herstellung einer erfindungsgemäßen Raumecke an einem Blechabschnitt ist die Erfindung nachstehend erläutert.

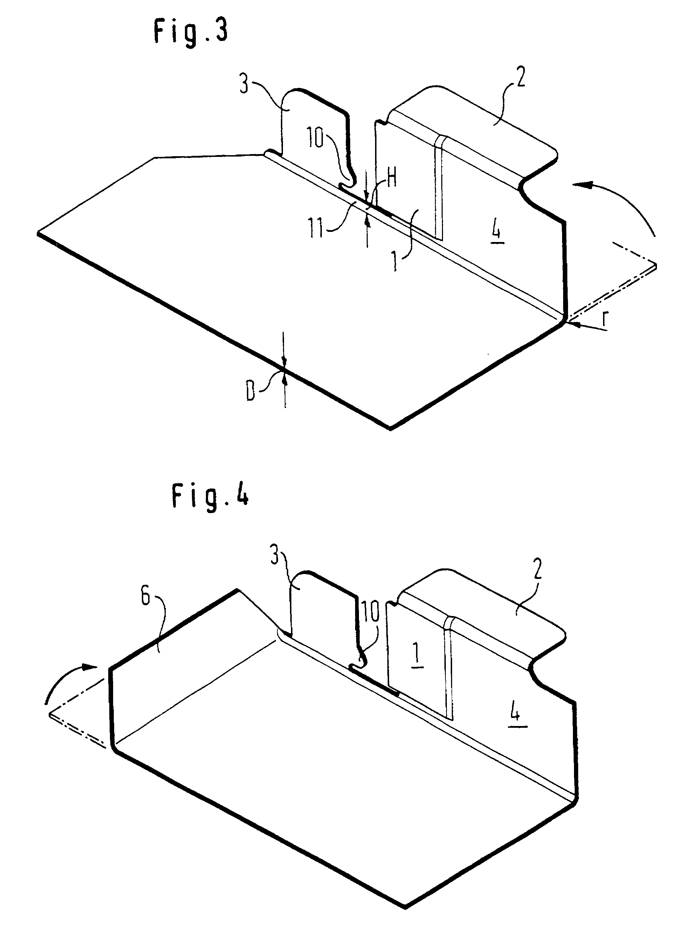

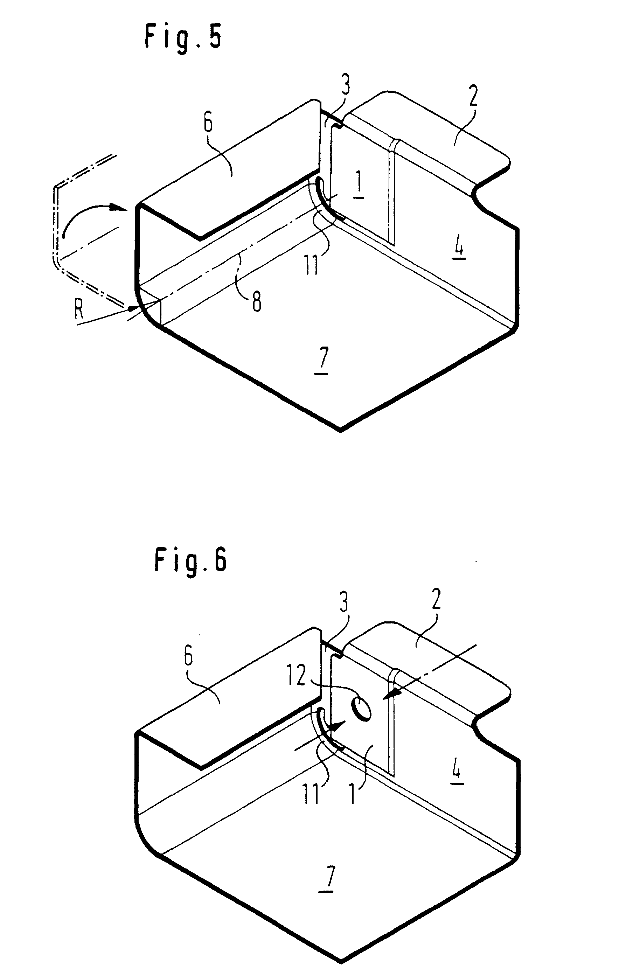

Die in Figur 1 dargestellte Abwicklung des Raumeckenbleches enthält bereits einen nach oben geprägten Abschnitt 1, dessen rückseitige Mulde später die Lasche 3 aufnehmen soll. Zunächst wird ein zur späteren Befestigung des Blechteils dienender Lappen 2 nach unten umgebogen (Figur 2). Dann werden die beiden Laschen und 4 um eine in Figur 1 strichpunktiert dargestellte, gemeinsame Kante 5 hochgestellt (Figur 3). In der in Figur 4 dargestellten Bearbeitungsphase wird ein Anschlaglappen 6 hochgestellt, der später zur Abstandshaltung des die Raumecke tragenden Werkstücks an einem anderen Gehäuseteil dient. Nach einem weiteren Biegevorgang während der Bearbeitungsphase in Figur 5 um eine rechtwinklig zur gemeinsamen Kante 5 und parallel zur Blechfläche 7 liegende Achse 8 überlappen sich die beiden Laschen 3 und 4 im rückwärtigen Bereich der Prägung 1.

Die Laschen 3 und 4 sind nach dem Hochstellen um die gemeinsame Kante 5 an ihrer Wurzel durch einen gemeinsam mit ihnen hochgestellten schmalen Blechabschnitt 11 miteinander verbunden. Dieser Blechabschnitt bildet nach der Bearbeitungsphase der Figur 5 einen der Raumecken-Rundung folgenden viertelkreisartigen Blechstreifen, der die Raumecke nach außen entschärft. Zur Ausfüllung des Raumes innerhalb dieses viertelkreisartigen Streifens 11 dient die an die Lasche 3 angeformte Nase 10, um die sich der viertelkreisartige Blechstreifen 11 nach Ausbildung der Raumecke schmiegt.

Zur unlösbaren Verbindung der beiden Laschen 3 und 4 dient ein Schweißpunkt oder - bei vorlackierten Blechen besser geeignet - eine als Loch-Zapfen-Verbindung ausgebildete Ausprägung 12 (Figur 6).

Als erfindungswesentlich hat sich die Einhaltung bestimmter Bemessungsregeln herausgestellt, damit sich der hochgestellte und um die Achse 8 gebogene Blechabschnitt 11 nicht wieder nach außen zurückstellt. Diese Bemessungsregeln bestimmen die Höhe H als die Summe der Blechdicke D und dem Biegeradius r (Fig. 3) um die Kante 5. Auch die Länge L (Fig. 1) des Blechabschnittes 11 zwischen den Laschen 3 und 4 ist für die Lösung der Aufgabenstellung erfindungsgemäß von Bedeutung und soll sich aus der Summe der doppelten Blechdicke D und dem Biegeradius R um die Achse 8 errechnen. In diesen Bemessungsregeln soll der Biegeradius r um die Kante 5 ungefähr im Bereich der Blechdicxe D liegen. "Ungefähr im Bereich" soll hier zwischen den Grenzen 0,5 bis 2,5 x Blechdicke D bedeuten. Demgegenüber soll der Biegeradius R um die Achse 8 7 bis 12,5 mal so groß sein wie die Blechdicke D. Dabei beträgt die Blechdicke üblicherweise 0,8 bis 1,0 mm.

Die Einhaltung der erfindungsgemäßen Bemessungsregeln ist vor allem bei vorlackierten Blechen für solche gerundeten Raumecken erforderlich, weil bei oberflächenvorbehandelten Blechen die Außenseite von Kratzern oder Abschabungen freigehalten werden muß. Ohne Anwendung der Erfindung gelingt die tütenlose Biegung des hochgestellten Blechabschnitts 11 nur bei entsprechender äußerer Gegenhaltung gegen das Bestreben der Tütenbildung. Dann wurde jedoch der Außenbereich der beim Biegen bewegten Bleche durch Anlage an dem Gegenhalter beschädigt, so daß diese Außenfläche nachbehandelt werden müßte.

## Patentansprüche

1. Gerundete Raumecke an einem Blechgehäuse für ein Hausgerät, bei der im Eckenbereich um eine gemeinsame Kante (5) hochgestellte Laschen (2, 3) nach einem weiteren Biegevorgang um eine rechtwinklig zur Kante (5) und parallel zur Blechfläche liegende Achse (8) sich überlappen und im Überlappungsbereich miteinander unlösbar verbunden sind, die nach dem Hochstellen durch einen gemeinsam mit ihnen hochgestellten schmalen Blechabschnitt (11) an ihrer Wurzel miteinander verbunden sind, **dadurch gekennzeichnet, daß** der hochgestellte Blechabschnitt (11) eine Höhe (H) über der inneren Blechfläche (7) aufweist, die im Bereich der Summe der Blechdicke (D) und dem Biegeradius (r) um die Kante (5) liegt und eine Länge (L), die im Bereich der Summe der doppelten Blechdicke (2 x D) und dem Biegeradius (R) um die Achse (8) liegt, wobei
- der Biegeradius (r) um die Kante (5) 0,5... 2,5 mal so groß ist wie die Blechdicke (D),
- der Biegeradius (R) um die Achse (8) 7... 12,5 mal so groß ist wie die Blechdicke (D) und
- die Blechdicke (D) 0,8... 1 mm beträgt.

2. Raumecke nach Anspruch 1, **dadurch gekennzeichnet, daß** der Biegeradius (r) um die Kante (5) im Bereich der Blechdicke (D) liegt.

## Claims

1. Rounded chamber corner at a sheet metal housing for a domestic appliance, in which straps (2, 3) bent up in the comer region about a common edge (5) mutually overlap after a further bending process about an axis (8) lying at right angles to the edge (5) and parallel to the sheet metal surface and are non-detachably connected together in the region of overlapping, the straps being connected together at their root by a narrow sheet metal portion (11) bent up together with them, **characterised in that** the bent-up sheet metal portion (11) has a height (H) above the inner sheet metal surface (7) which lies in the region of the sum of the sheet metal thickness (D) and the bending radius (r) about the edge (5) and a length (L) which lies in the region of the sum of twice the sheet metal thickness (2 x D) and the bending radius (R) about the axis (8), wherein
- the bending radius (r) about the edge (5) is 0.5 to 2.5 times as large as the sheet metal thickness (D),
- the bending radius (R) about the axis (8) is 7 to 12.5 times as large as the sheet metal thickness (D) and
- the sheet metal thickness (D) amounts to 0.8 to 1 mm.

2. Chamber corner according to claim 1, **characterised in that** the bending radius (r) about the edge (5) lies in the region of the sheet metal thickness (D).

## Revendications

1. Coin arrondi d'un carter en tôle pour un appareil ménager ayant des pattes (2, 3) qui, après avoir été relevées autour d'une arête commune (5) dans la zone d'un coin, se chevauchent après un autre pliage autour d'un axe (8) perpendiculaire à ladite arête (5) et parallèle à la surface de la tôle, et sont assemblées de manière indétachable dans la zone de chevauchement, ces pattes, après avoir été relevées, ayant par ailleurs en commun, au niveau de leur base, une étroite partie de tôle (11) qui a été relevée en même temps qu'elles, **caractérisé en ce que** la partie de tôle (11) qui a été relevée surplombe la surface de tôle intérieure (7) d'une hauteur (H) de l'ordre de la somme de l'épaisseur de la tôle (D) et du rayon de courbure (r) autour de l'arête (5) et une longueur (L) de l'ordre de la somme du rayon de courbure (R) autour de l'axe (8) et du double de l'épaisseur de la tôle (2xD),
- le rayon de courbure (r) autour de l'arête (5) étant 0,5...2,5 fois l'épaisseur de la tôle (D),
- le rayon de courbure (R) autour de l'axe (8) étant 7...12,5 fois l'épaisseur de la tôle (D) et
- l'épaisseur de la tôle (D) ayant une valeur comprise entre 0,8 mm et 1 mm.

2. Coin arrondi selon la revendication 1, **caractérisé en ce que** le rayon de courbure (r) autour de l'arête (5) a une valeur de l'ordre de l'épaisseur de la tôle (D).
